(19) Europäisches Patentamt
European Patent Office
Office européen des brevets

(11) **EP 3 685 504 B1**

(12) **EUROPÄISCHE PATENTSCHRIFT**

(45) Veröffentlichungstag und Bekanntmachung des Hinweises auf die Patenterteilung:
**06.07.2022   Patentblatt 2022/27**

(21) Anmeldenummer: **18742789.3**

(22) Anmeldetag: **18.07.2018**

(51) Internationale Patentklassifikation (IPC):
*H02P 21/22* (2016.01)          *H02P 25/024* (2016.01)
*H02P 21/00* (2016.01)          *H02P 9/14* (2006.01)
*H02P 25/22* (2006.01)

(52) Gemeinsame Patentklassifikation (CPC):
**H02P 21/22; H02P 9/14; H02P 21/0021;**
**H02P 25/024; H02P 25/22;** H02P 23/26;
H02P 2101/45; H02P 2209/13

(86) Internationale Anmeldenummer:
**PCT/EP2018/069490**

(87) Internationale Veröffentlichungsnummer:
**WO 2019/057361 (28.03.2019 Gazette 2019/13)**

(54) **VERFAHREN ZUM BETREIBEN EINER FREMDERREGTEN ELEKTRISCHEN MASCHINE**

METHOD FOR OPERATING A SEPARATELY EXCITED ELECTRIC MACHINE

PROCÉDÉ POUR FAIRE FONCTIONNER UNE MACHINE ÉLECTRIQUE À EXCITATION SÉPARÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017   DE 102017216790**

(43) Veröffentlichungstag der Anmeldung:
**29.07.2020   Patentblatt 2020/31**

(73) Patentinhaber:
• **Robert Bosch GmbH**
**70442 Stuttgart (DE)**
• **SEG Automotive Germany GmbH**
**70499 Stuttgart (DE)**

(72) Erfinder: **SZEPANSKI, Daniel**
**71636 Ludwigsburg (DE)**

(74) Vertreter: **DehnsGermany Partnerschaft von Patentanwälten**
**Theresienstraße 6-8**
**80333 München (DE)**

(56) Entgegenhaltungen:
WO-A1-90/06016          DE-A1-102015 117 813
JP-A- 2012 050 259

• **PYRHONEN J ET AL: "A DIRECT TORQUE CONTROLLED SYNCHRONOUS MOTOR DRIVE CONCEPT FOR DYNAMICALLY DEMANDING APPLICATIONS", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, Bd. CONF. 8, Nr. CONF. 08, 7. September 1999 (1999-09-07), Seiten 1-10, XP000878454, ISBN: 978-90-75815-04-7**
• **YOONJAE KIM ET AL: "Copper-Loss-Minimizing Field Current Control Scheme for Wound Synchronous Machines", IEEE TRANSACTIONS ON POWER ELECTRONICS, Bd. 32, Nr. 2, 1. Februar 2017 (2017-02-01), Seiten 1335-1345, XP055505503, USA ISSN: 0885-8993, DOI: 10.1109/TPEL.2016.2547953**

EP 3 685 504 B1

## EP 3 685 504 B1

**Beschreibung**

Die vorliegende Erfindung betrifft ein Verfahren zum Betreiben einer fremderregten elektrischen Maschine sowie eine Recheneinheit und ein Computerprogramm zu dessen Durchführung.

Stand der Technik

Elektrische Maschinen, insbesondere Generatoren, können zur Umwandlung mechanischer Energie in elektrische Energie im Kraftfahrzeug verwendet werden. Üblicherweise werden dazu Klauenpolgeneratoren verwendet, welche meistens mit elektrischer Erregung ausgestattet sind. Da Klauenpolgeneratoren Drehstrom, meist dreiphasig, erzeugen, ist für die üblichen Kraftfahrzeug-Gleichspannungs-Bordnetze eine Gleichrichtung erforderlich. Dazu können Gleichrichter auf Basis von Halbleiterdioden oder Halbleiterschaltern verwendet werden.

Generatoren können auch zum Starten einer Brennkraftmaschine verwendet werden. Solche Generatoren werden auch als Startergenerator bezeichnet. Üblicherweise wird ein derartiger Startergenerator nur bei sehr kleinen Drehzahlen motorisch betrieben, da das erzeugbare Drehmoment über der Drehzahl schnell abnimmt. Denkbar sind jedoch auch größere elektrische Maschinen, die dann auch in einem Hybrid-Fahrzeug zum Antrieb des Fahrzeugs, zumindest aber zur Unterstützung der Brennkraftmaschine, verwendet werden können.

Für die $CO_2$-Bilanz und den Verbrauch eines Fahrzeugs ist die Effizienz der elektrischen Maschine relevant. Diese hängt maßgeblich vom Erregerstrom ab. Der Erregerstrom kann beispielsweise basierend auf einer Vermessung und einem Abspeichern in Lookup-Tabellen gewählt oder analytisch berechnet werden.

Eine Möglichkeit zur Optimierung des Drehmoments einer elektrischen Maschine wird beispielsweise in der US 7 723 933 B2 beschrieben.

PYRHONEN J ET AL: "A DIRECT TORQUE CONTROLLED SYNCHRONOUS MOTOR DRIVE CONCEPT FOR DYNAMICALLY DEMANDING APPLICATIONS", 8TH EUROPEAN CONFERENCE ON POWER ELECTRONICS AND APPLICATIONS. LAUSANNE, CH, SEPT. 7- 9, 1999; [EPE. EUROPEAN CONFERENCE ON POWER ELECTRONICS AND APPLICATIONS], EPE ASSOCIATION, BRUSSELS, BE, Bd. CONF. 8, Nr. CONF. 08, 7. September 1999 (1999-09-07), Seiten 1-10, beschreibt eine Kombination (DTC) eines auf DFLC (Direct Flux Linkage Control) basierenden "Spannungsmodells" mit einem auf zwei Achsen basierenden Induktivitäts- und Widerstandsparameter, um die beste Leistung zu erzielen. Die Feldwicklungsstromregelung ist ein wesentlicher Bestandteil des synchronen DTC-Motorantriebs. Ein Polwinkelbegrenzungsverfahren ist erforderlich, um die Stabilität insbesondere im Bereich der Feldschwächung aufrechtzuerhalten.

YOONJAE KIM ET AL: "Copper-Loss-Minimizing Field Current Control Scheme for Wound Synchronous Machines", IEEE TRANSACTIONS ON POWER ELECTRONICS, Bd. 32, Nr. 2, 1. Februar 2017 (2017-02-01), Seiten 1335-1345, beschreibt ein Verfahren zur Steuerung des kupferverlustminimierenden Drehmoments für gewickelte Synchronmaschinen (WSMs) im Bereich der Feldschwächung. Die Ferrari-Methode wird wiederholt für jeden Feldstrom angewendet, um Schnittpunkte zwischen der Spannungsgrenze und den Drehmomentkurven zu finden. Dann wird ein verlustminimierender Stromsatz gefunden, der mindestens einer Funktion zweiter Ordnung entspricht, die an drei Ferrari-Lösungen angepasst ist. Bei jedem Schritt werden Induktivitätsänderungen reflektiert. In der Kostenfunktion ist der Kupferverlust der Feldwicklung zusammen mit dem Kupferverlust des Stators enthalten.

Offenbarung der Erfindung

Erfindungsgemäß werden ein Verfahren zum Betreiben einer fremderregten elektrischen Maschine sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zum Betreiben einer fremderregten elektrischen Maschine, beispielsweise einer Klauenpolmaschine. Dabei wird ein Erregerstrom im Rahmen einer Regelung eingestellt. Hierzu wird der Erregerstrom erhöht, wenn im d-q-Koordinatensystem ein Winkel zwischen einer Spannung und der d-Achse größer als ein Winkel zwischen einem Strom und der d-Achse oder als der Winkel zwischen dem Strom und der d-Achse versetzt um 180° ist, und der Erregerstrom wird verringert, wenn der Winkel zwischen der Spannung und der d-Achse kleiner als der Winkel zwischen dem Strom und der d-Achse oder als der Winkel zwischen dem Strom und der d-Achse versetzt um 180° ist. Insbesondere wird dabei eine Differenz zwischen dem Winkel zwischen der Spannung und der d-Achse und dem Winkel zwischen dem Strom und der d-Achse im d-q-Koordinatensystem unter Verwendung des Erregerstroms als Stellgröße auf einen Wert von 0° oder 180° geregelt. Unter Strom und Spannung sind hierbei insbesondere die Beträge von Phasenstrom bzw. Phasenspannung der elektrischen Maschine zu verstehen. Die Regelung kann mit einem Proportional- und/oder einem Integralanteil erfolgen, also beispielsweise im Sinne eines sog. PI-Reglers. Vorzugsweise wir die Differenz in einem motorischen Betrieb auf 0° und in einem generatorischen Betrieb auf 180° geregelt.

Um einen optimalen Wirkungsgrad zu erreichen gilt es, eine Kombination aus Phasenstrom in d-q-Koordinaten und Erregerstrom zu finden, die die Gesamtverluste aus Erregerkreis- und Maschinenverlusten (ohmsche Verluste an den Strängen, Wirbelstromverluste, Eisenverluste) minimiert. Die sog. d-q-Koordinaten, auch als Raumzeigerdarstellung bekannt, können durch sog. Clarke- und/oder Park-Transformationen aus den einzelnen Phasen erhalten werden.

Bei kleineren Drehzahlen sind die Verluste im Erregerstrom aufgrund des größeren Widerstands dominant. Hier ist es in der Regel nur möglich, den optimalen Erregerstrom durch Variation messtechnisch zu ermitteln. Insofern ist es zweckmäßig, wenn das vorliegende Verfahren, d.h. die Regelung der erwähnten Differenz bzw. die Erhöhung oder Verringerung des Erregerstroms, dann oder nur dann erfolgt, wenn eine Drehzahl der elektrischen Maschine oberhalb einer vorgebbaren Drehzahlgrenze liegt, was meist mit einer sog. Spannungsgrenze einhergeht, da dann die elektrische Maschine auch mit sog. Block-Ansteuerung betrieben wird. Dabei werden die Amplituden der Phasenspannungen in aller Regel nicht verändert, sondern sind maximal (also an der Spannungsgrenze). Insofern ist es auch erfindungsgemäß, im Rahmen des vorliegenden Verfahrens die elektrische Maschine mit Block-Ansteuerung zu betreiben, wenn die Drehzahl oberhalb der erwähnten Drehzahlgrenze liegt. Unterhalb dieser Drehzahlgrenze hingegen kann eine übliche PWM-Ansteuerung verwendet werden.

Sobald die Spannungsgrenze erreicht wird (d.h. wenn der Blockbetrieb bzw. die Block-Ansteuerung verwendet wird), liegt der optimale Wirkungsgrad der elektrischen Maschine bei einem Differenzwinkel zwischen der Spannung und dem Strom im d-q-Koordinatensystem, für den der Kosinus betragsmäßig eins ergibt, also bei einer Differenz von 0° oder 180°, da dort der Phasenstrom minimal wird.

Ein aktueller Betriebspunkt der elektrischen Maschine im Blockbetrieb liegt in der Regel auf einem sog. Spannungskreis in der Stromortskurve, wie sie später in Bezug auf die Figuren noch näher erläutert wird, und kann auch nur darauf verschoben werden. Unter Berücksichtigung des sog. Kipp-Punktes bzw. Kipp-Momentes gibt es somit nur einen Schnittpunkt des Spannungskreises mit einer Linie konstanten Drehmoments. Der Mittelpunkt des Spannungskreises wird durch den Erregerfluss und die d-Induktivität bestimmt und kann somit durch die Variation des Erregerstroms verschoben werden, da es sich im vorliegenden Fall um eine fremderregte Maschine handelt.

Wird der Erregerstrom erhöht, so verschiebt sich der Spannungskreis im d-q-Koordinatensystem nach links. Somit verschiebt sich ebenfalls der Stromzeiger des aktuellen Betriebspunkts. Die Phase des Stroms wird größer und die der Spannung kleiner. Durch eine Variation des Erregerstroms lassen sich die Strom- und Spannungszeiger somit so verschieben, dass die oben genannte Bedingung erreicht und der Wirkungsgrad optimiert wird. Der Erregerstrom dient dabei also als Stellgröße für die Regelung der Differenz. Der Erregerstrom kann jedoch auch selbst - dann im Rahmen einer unterlagerten Regelung - auf den benötigten Wert eingeregelt werden. Vorzugsweise wird hierzu ein Initialwert vorgegeben, sodass hier nur noch die Differenz zu diesem Initialwert in diese Regelung einbezogen werden muss.

Im Rahmen des Betriebs der elektrischen Maschine kann vorzugsweise auch die Spannung in d-q-Koordinaten basierend auf einem einzustellenden und/oder einzuregelnden Vorkommutierungswinkel ermittelt werden. Dabei kann dann zweckmäßigerweise auch basierend auf einem von der elektrischen Maschine geforderten Drehmoment und einem zuletzt ermittelten Drehmoment der Vorkommutierungswinkel eingestellt und/oder eingeregelt werden.

Für einen optimalen Betrieb der elektrischen Maschine ist dabei in der Regel erforderlich, dass sich ein minimal möglicher Strom in der elektrischen Maschine einstellt. Hierzu sollten die (innere) Spannung der elektrischen Maschine und der zugehörige Motorgrundwellenstrom in Phase liegen. Hierzu ist in der Regel aufgrund der Induktivität der elektrischen Maschine eine zeitlich vorversetzte Ansteuerung der Wicklungsstränge nötig. Diese Korrektur, welche das nacheilende Verhalten des Motorgrundwellenstroms kompensiert, wird durch den sog. Vorkommutierungswinkel beschrieben.

Eine erfindungsgemäße Recheneinheit, z.B. ein Steuergerät eines Kraftfahrzeugs oder eine Steuereinheit für eine elektrische Maschine, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen

Figur 1    zeigt schematisch eine elektrische Maschine, bei der ein erfindungsgemäßes Verfahren durchführbar ist.

Figur 2    zeigt schematisch eine Möglichkeit zur Ansteuerung einer elektrischen Maschine.

Figur 3    zeigt schematisch Stromverläufe bei einer elektrischen Maschine.

Figur 4    zeigt schematisch einen aktuellen Betriebspunkt einer elektrischen Maschine in einem d-q-Koordinatensystem.

Figur 5    zeigt schematisch einen Ablauf eines erfindungsgemäßen Verfahrens in einer bevorzugten Ausführungsform.

Figur 6    zeigt schematisch einen Ablauf eines erfindungsgemäßen Verfahrens in einer weiteren bevorzugten Ausführungsform.

Ausführungsform(en) der Erfindung

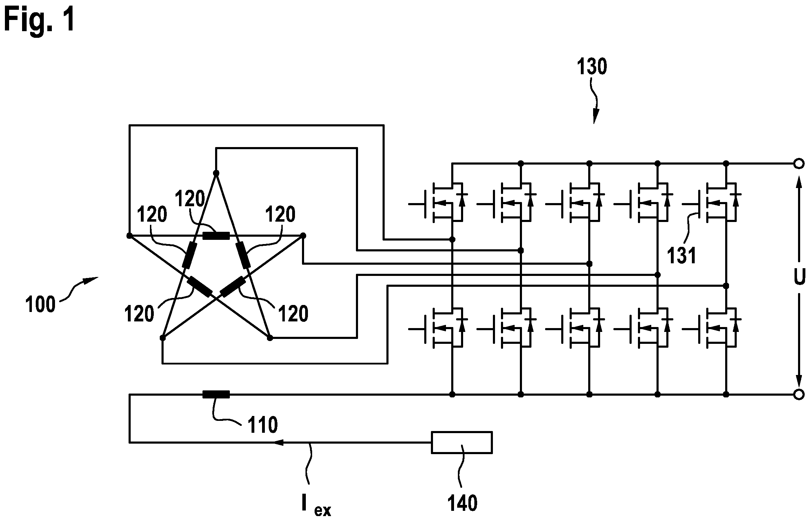

In Figur 1 ist schematisch und als Schaltbild eine elektrische Maschine, bei der ein erfindungsgemäßes Verfahren durchführbar ist, dargestellt. Die elektrische Maschine 100 ist hier beispielhaft als eine fremderregte, fünfphasige elektrische Maschine ausgebildet. Es versteht sich, dass auch eine andere Anzahl an Phasen, beispielsweise drei, verwendet werden kann. Die elektrische Maschine 100 kann beispielsweise als Klauenpolmaschine ausgebildet sein.

Die elektrische Maschine 100 weist hier fünf Statorwicklungen 120 und eine Erreger- bzw. Läuferwicklung 110 auf. Über eine als Ansteuereinheit 140 ausgebildete Recheneinheit kann ein Erregerstrom $I_{ex}$ in der Erregerwicklung 110 eingestellt werden. Weiterhin ist eine Schaltungsanordnung 130 mit Schaltern 131, hier beispielhaft MOSFETS, von denen nur einer mit einem Bezugszeichen versehen ist, vorgesehen, mittels welcher eine Spannung U an die Statorwicklungen 120 angelegt oder abgegriffen werden kann, je nachdem ob die elektrische Maschine im motorischen oder generatorischen Betrieb verwendet wird.

Die Schalteranordnung 130 und die Steuereinheit 140 können auch jeweils Teil einer gemeinsamen Steuereinheit oder eines Inverters bzw. Stromrichters für die elektrische Maschine sein.

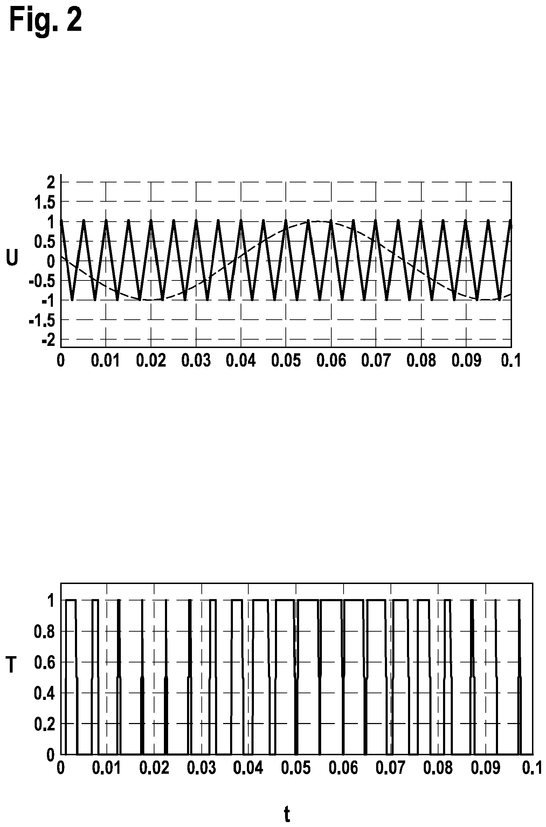

In Figur 2 ist schematisch eine Möglichkeit zur Ansteuerung einer elektrischen Maschine, wie sie beispielsweise in Figur 1 gezeigt ist, dargestellt. Im oberen Diagramm ist eine Spannung U über der Zeit t dargestellt, im unteren Diagramm ein Tastgrad T über der Zeit t.

Hierbei handelt es sich um Ansteuermuster nach einem Standardverfahren der sog. Dreieck-Sinus-Modulation. Die gewünschte Sollspannung, nämlich der Sinus-Verlauf im oberen Diagramm, wird hier überlagert von einem Dreiecksignal (auch im oberen Diagramm gezeigt), das eine deutlich höhere Frequenz aufweist als das der elektrischen Grundwelle (in der Regel mehr als 10 kHz). Jeder Schnittpunkt kennzeichnet ein Umschalten des PWM-Signals.

Das Ansteuermuster im unteren Diagramm kann nun mit einem PWM-Steuerwerk erzeugt werden. Für eine Klauenpolmaschine wird diese PWM-Ansteuerung in der Regel bis zur erwähnten Spannungsgrenze verwendet. Ab bzw. oberhalb der Spannungsgrenze wird die elektrische Maschine dann mit einem Blockmuster im Blockbetrieb bzw. mit der sog. Block-Ansteuerung angesteuert.

Diese Block-Ansteuerung zeichnet sich dadurch aus, dass die Phasenspannungen die maximal mögliche Amplitude aufweisen und diese Amplitude nicht veränderbar ist (theoretisch ist dies möglich durch Ansteuerung mit Blockbreiten von weniger 180°, dies wird jedoch in aller Regel nicht verwendet).

Als Stellgröße für ein gewünschtes Soll-Drehmoment der elektrischen Maschine dient nun neben dem Erregerstrom die Phasenlage des Spannungsvektors, der sogenannte Vorkommutierungswinkel.

Da sich die Amplitude im Blockbetrieb nicht verändern lässt (oder zumindest nicht verändert wird), wird diese Ansteuerart nur oberhalb der Spannungsgrenze verwendet (d.h. wenn die Polradspannung größer als die anliegende Zwischenkreisspannung ist), im vorliegenden Fall typischerweise bei Drehzahlen größer als 3.000/min.

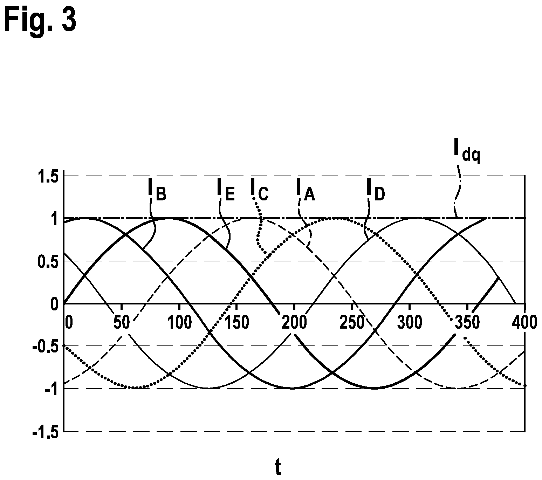

In Figur 3 sind Stromverläufe, hier die Phasenströme, gezeigt, die bei drehender elektrischer Maschine und sinusförmiger Phasenspannungsvorgabe erzeugt werden. Hierzu ist ein Strom I über der Zeit t aufgetragen.

Bei symmetrischer Verteilung können die einzelnen Phasenströme $I_A$, $I_B$, $I_C$, $I_D$ und $I_E$ zu einem Raumzeiger zusammengefasst werden. Hierzu werden die bekannten Clark- und Park-Transformationen verwendet. Zunächst ergeben sich die Ströme $I_\alpha$ und $I_\beta$ mit der Clarke-Transformation gemäß den Formeln:

$$I_\alpha = \left( I_A + I_B \cos\left(\frac{2\pi}{5}\right) + I_C \cos\left(\frac{4\pi}{5}\right) + I_D \cos\left(\frac{6\pi}{5}\right) + I_E \cos\left(\frac{8\pi}{5}\right) \right)$$

und

$$I_\beta = \left( I_B \sin\left(\frac{2\pi}{5}\right) + I_C \sin\left(\frac{4\pi}{5}\right) + I_D \sin\left(\frac{6\pi}{5}\right) + I_E \sin\left(\frac{8\pi}{5}\right) \right).$$

Daraus ergeben sich die Ströme $I_d$ und $I_q$ mit der Park-Transformation dann gemäß den Formeln:

$$I_d = I_\alpha \cos\theta + I_\beta \sin\theta \quad \text{und} \quad I_q = -I_\alpha \sin\theta + I_\beta \cos\theta ,$$

wobei mit $\theta$ hier der Winkel des Läufers bzw. Rotors der elektrischen Maschine bezeichnet ist. Auf die gleiche Weise kann auch die Spannung in d-q-Koordination transformiert werden.

Um den optimalen Wirkungsgrad der elektrischen Maschine zu erreichen, gilt es nun, eine Kombination aus dem Betrag des Phasenstroms $I_{dq}$ in d-q-Koordination und dem Erregerstrom $I_{ex}$ zu finden, die die Gesamtverluste aus Erregerkreis- und Maschinenverlusten (ohmsche Verluste an den Strängen, Wirbelstromverluste, Eisenverluste) minimiert. Bei kleineren Drehzahlen sind die Verluste im Erregerstrom aufgrund des größeren Widerstands dominant. Hier kann der optimale Erregerstrom durch Variation messtechnisch ermittelt werden. Insofern ist das vorliegende Verfahren vorzugsweise nur für den Betrieb an der Spannungsgrenze anzuwenden. Sobald die Spannungsgrenze erreicht wird (d.h. wenn der Blockbetrieb verwendet wird), liegt der optimale Wirkungsgrad bei $\cos(\varphi)=1$, da dort der Phasenstrom minimal wird. Der Winkel $\varphi$ gibt dabei die Winkeldifferenz zwischen Strom- und Spannungszeiger an, wie sie nachfolgend noch näher erläutert werden.

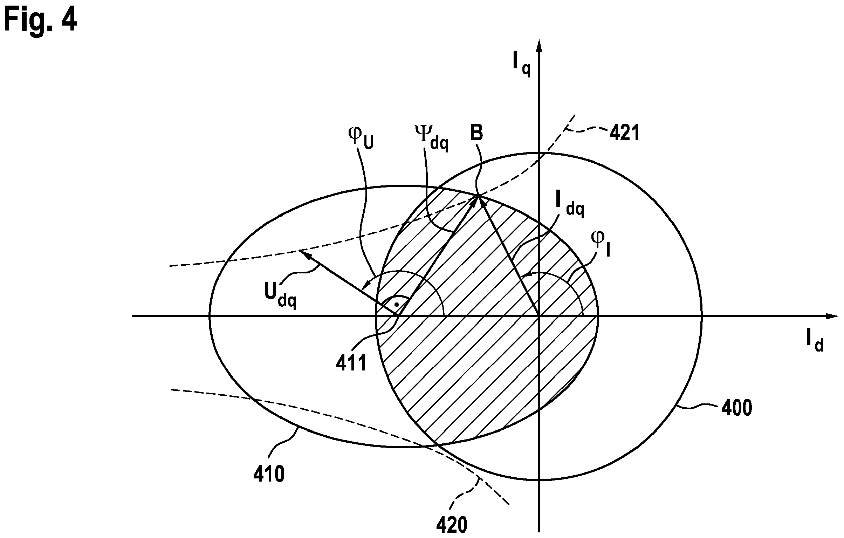

In Figur 4 ist schematisch ein aktueller Betriebspunkt einer elektrischen Maschine in einem d-q-Koordinatensystem dargestellt, und zwar mittels der sog. Stromortskurve. Hierzu sind die Ströme $I_d$ und $I_q$ aufgetragen. Anhand dieser Stromortskurve lässt sich die Strategie zum Regeln dieser Winkeldifferenz gemäß vorliegendem Verfahren erläutern.

In der Stromortskurve ist der aktuelle Betriebspunkt B der elektrischen Maschine dargestellt. Dieser Betriebspunkt ergibt sich durch den Stromzeiger bzw. den Strom $I_{dq}$ und den Spannungszeiger, der die Spannung $U_{dq}$ und den verketteten Fluss $\Psi_{dq}$ anzeigt. Der Betriebspunkt ist das gemeinsame Ende der Zeiger für den Strom $I_{dq}$ und den verketteten Fluss $\Psi_{dq}$.

Im Blockbetrieb kann der Betriebspunkt B nur auf dem sog. Spannungskreis, hier mit 410 bezeichnet, verschoben werden. Der Spannungskreis 410 stellt dabei eine maximal mögliche Spannung (bzw. nach Umrechnung den maximal möglichen verketteten Fluss), die im Blockbetrieb dauerhaft verwendet wird, dar. Für ein gefordertes bzw. gewünschtes Drehmoment ergibt sich jenseits des sog. Kipp-Punktes bzw. Kipp-Momentes somit nur ein Schnittpunkt des Spannungskreises 410 mit der Linie konstanten Drehmoments, hier mit 421 bezeichnet. Mit 420 ist zudem ein maximal bzw. minimal mögliches Drehmoment bezeichnet.

Das Kipp-Moment stellt dabei ein solches Drehmoment dar, bei dessen Überschreiten bei Entlanglaufen der Spannungskurve durch den Stromzeiger $I_{dq}$ trotz Stromerhöhung wieder ein kleineres Drehmoment resultieren würde, was der Effizienz abträglich wäre.

Mit 400 ist zudem ein Kreis maximalen Stroms, also für einen Maximalwert des Stroms $I_{dq}$ gezeigt, wie er sich daraus ergibt, dass die in der elektrischen Maschine bzw. einem verwendeten Inverter verwendeten Leitungen nicht unendlich hohen Strom führen können. Damit ergibt sich als überhaupt möglicher Bereich für den Betriebspunkt B der schraffiert gezeigte Bereich. Aufgrund des Blockbetriebs wird dieser Bereich zudem auf die Grenzlinie dieses schraffierten Bereichs, soweit sie auf dem Spannungskreis 410 liegt, eingeschränkt.

Der Mittelpunkt 411 des Spannungskreises 410 (oder der Spannungsellipse) wird durch den Erregerfluss in der Erregerwicklung und die d-Induktivität bestimmt und kann somit durch die Variation des Erregerstroms verschoben werden, da es sich im vorliegenden Fall um eine fremderregte Maschine handelt. Wird der Erregerstrom erhöht, so verschiebt sich der Spannungskreis 410 nach links. Somit verschiebt sich ebenfalls der Stromzeiger $I_{dq}$ des aktuellen Betriebspunkts B. Der Winkel $\varphi_I$ zwischen dem Strom und der d-Achse wird größer und der Winkel $\varphi_U$ zwischen der Spannung und der d-Achse kleiner.

Durch eine Variation des Erregerstroms lassen sich die Strom- und Spannungszeiger somit so verschieben, dass $\cos(\varphi)=1$ im motorischen und $\cos(\varphi)=-1$ im generatorischen Betrieb erreicht werden kann.

Aus diesem Zusammenhang lässt sich die Änderung des Erregerstroms in Abhängigkeit von der Phasenlage, d.h. dem Phasenwinkel, von Strom und Spannung herleiten: Ist der Winkel $\varphi_U$ zwischen der Spannung und der d-Achse größer als der Winkel $\varphi_I$ zwischen dem Strom und der d-Achse, so wird der Erregerstrom erhöht, ist er kleiner, so wird der Erregerstrom verringert. Nach diesem Zusammenhang lässt sich ein Regler entwickeln der online den Erregerstrom optimiert.

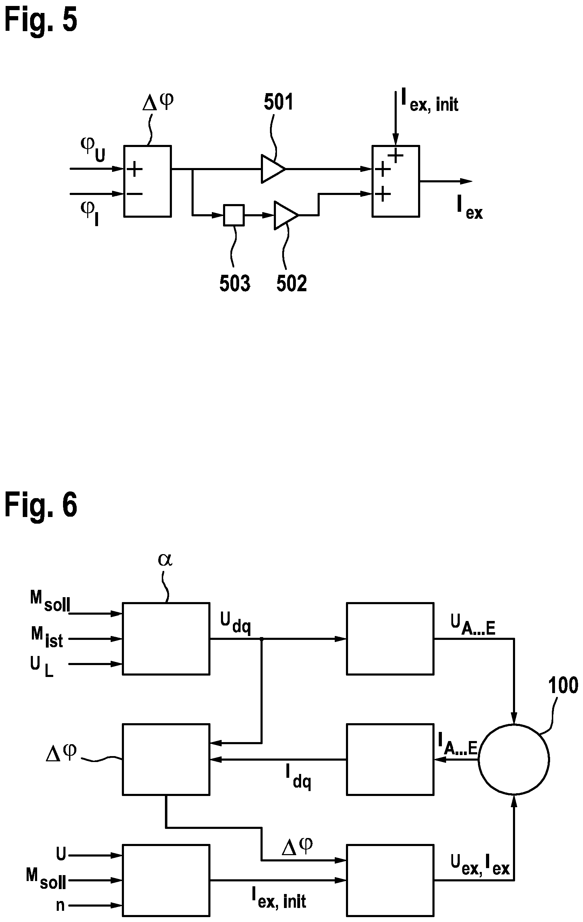

In Figur 5 ist schematisch ein Ablauf eines erfindungsgemäßen Verfahrens in einer bevorzugten Ausführungsform dargestellt. Aus der Differenz $\Delta\varphi$ zwischen dem Winkel $\varphi_U$ zwischen der Spannung und der d-Achse und dem

Winkel $\varphi_I$ zwischen dem Strom und der d-Achse wird die Regelabweichung bestimmt und mittels Proportionalanteil 501 und Integralanteil 502 (mit Integrator 503) in einen Sollwert für den Erregerstrom $I_{ex}$ gewandelt.

Um die Dynamik der Regelung zu erhöhen, kann bevorzugt zusätzlich ein Erregerstrominitialwert $I_{ex,init}$ am Reglerausgang addiert werden. Dadurch muss der Regler beispielsweise nur eine Abweichung die aus Temperatur-, Maschinenstreuungs- und/oder Alterungseffekten resultiert, ausregeln. Der Initialwert kann beispielsweise ausgemessen werden. Für den generatorischen Betrieb muss die Regelabweichung entsprechend um den 180° angepasst werden bzw. es muss auf 180° statt 0° geregelt werden.

In Figur 6 ist schematisch ein Ablauf eines erfindungsgemäßen Verfahrens in einer weiteren bevorzugten Ausführungsform dargestellt. Basierend auf einem geforderten Drehmoment $M_{soll}$ und dem zuletzt ermitteltem Moment $M_{ist}$ wird der Vorkommutierungswinkel $\alpha$ geregelt.

Zusammen mit der aktuellen Spannungslage $U_L$ kann mit dem Vorkommutierungswinkel $\alpha$ die Spannung $U_{dq}$ ausgerechnet werden. Diese wird in einem separaten Block in das erforderliche Blockpulsmuster umgewandelt und die zugehhörigen Signale für die elektrische Maschine werden generiert, hier mit $U_{A...E}$ angedeutet, um die elektrische Maschine 100 zu betreiben.

Die Phasenströme $I_{A...E}$ der elektrischen Maschine 100 werden gemessen und in $I_{dq}$-Werte umgewandelt, und zwar mittels Clarke- und Park-Transformation. Diese $I_{dq}$-Werte werden zum einen dazu verwendet, um das aktuelle Drehmoment auszurechnen und zum anderen, um zusammen mit den Spannungswerten $U_{dq}$ für die Ermittlung der Regelabweichung bzw. der Differenz $\Delta\varphi$ genutzt. Der Erregerstrominitialwert $I_{ex,init}$ kann aus einer Lookup-Tabelle in Abhängigkeit von der Spannung U, dem geforderten Drehmoment $M_{soll}$ und der Rotordrehzahl n ausgelesen werden. Aus diesen Werten wird dann nach dem zuvor erläuterten Ablauf der finale Erregerstrom $I_{ex}$ ermittelt. Anschließend kann der Erregerstrom beispielsweise mittels PWM-Verfahren unter Verwendung einer entsprechenden Erregerspannung $U_{ex}$ eingeregelt werden.

**Patentansprüche**

1. Verfahren zum Betreiben einer fremderregten elektrischen Maschine (100), bei dem ein Erregerstrom ($I_{ex}$) als Stellgröße im Rahmen einer Regelung eingestellt wird,
**dadurch gekennzeichnet, dass** die elektrische Maschine (100) mit Blockansteuerung betrieben wird,
wobei, wenn die Drehzahl (n) der elektrischen Maschine oberhalb einer vorgebbaren Drehzahlgrenze liegt, der Erregerstrom ($I_{ex}$) erhöht wird, wenn im d-q-Koordinatensystem ein Winkel ($\varphi_U$) zwischen einer Spannung und der d-Achse größer als ein Winkel ($\varphi_I$) zwischen einem Strom und der d-Achse oder als der Winkel zwischen dem Strom und der d-Achse versetzt um 180°, ist, und der Erregerstrom ($I_{ex}$) verringert wird, wenn im d-q-Koordinatensystem der Winkel ($\varphi_U$) zwischen der Spannung und der d-Achse kleiner als der Winkel ($\varphi_I$) zwischen dem Strom und der d-Achse oder als der Winkel zwischen dem Strom und der d-Achse versetzt um 180° ist.

2. Verfahren nach Anspruch 1, wobei eine Differenz ($\Delta\varphi$) zwischen dem Winkel ($\varphi_U$) zwischen der Spannung und der d-Achse und dem Winkel ($\varphi_I$) zwischen dem Strom und der d-Achse im d-q-Koordinatensystem unter Verwendung des Erregerstroms ($I_{ex}$) als Stellgröße auf einen Wert von 0° oder 180° geregelt wird.

3. Verfahren nach Anspruch 2, wobei die Differenz ($\Delta\varphi$) in einem motorischen Betrieb auf 0° und in einem generatorischen Betrieb auf 180° geregelt wird.

4. Verfahren nach einem der vorstehenden Ansprüche, wobei die elektrische Maschine (100) oberhalb der Drehzahlgrenze mit Blockansteuerung und unterhalb der Drehzahlgrenze mit PWM-Ansteuerung betrieben wird.

5. Verfahren nach einem der vorstehenden Ansprüche, wobei der Erregerstrom ($I_{ex}$) als Stellgröße im Rahmen einer unterlagerten Regelung eingeregelt wird, insbesondere unter Vorgabe eines Initialwertes ($I_{ex,init}$).

6. Verfahren nach einem der vorstehenden Ansprüche, in Rückbezug auf Anspruch 2, wobei die Regelung eine Proportional- und/oder einen Integralanteil (501, 502) umfasst.

7. Verfahren nach einem der vorstehenden Ansprüche, wobei die Spannung ($U_{dq}$) in d-q-Koordinaten basierend auf einem einzustellenden und/oder einzuregelnden Vorkommutierungswinkel ($\alpha$) ermittelt wird.

8. Verfahren nach Anspruch 7, wobei basierend auf einem von der elektrischen Maschine (100) geforderten Drehmoment ($M_{soll}$) und einem zuletzt ermittelten Drehmoment ($M_{ist}$) der Vorkommutierungswinkel ($\alpha$) eingestellt und/oder eingeregelt wird.

**9.** Recheneinheit (140), die dazu eingerichtet ist, ein Verfahren nach einem der vorstehenden Ansprüche durchzuführen.

**10.** Computerprogramm, das eine Recheneinheit (140) dazu veranlasst, ein Verfahren nach einem der Ansprüche 1 bis 8 durchzuführen, wenn es auf der Recheneinheit (140) ausgeführt wird.

**11.** Maschinenlesbares Speichermedium mit einem darauf gespeicherten Computerprogramm nach Anspruch 10.

**Claims**

**1.** Method for operating an externally excited electrical machine (100), in which an excitation current ($I_{ex}$) is set as a manipulated variable within the scope of a closed-loop control,
**characterised in that** the electric machine (100) is operated with block control,
wherein, if the speed (n) of the electrical machine is above a prescribable speed limit, the excitation current ($I_{ex}$) is increased if, in the d-q coordinate system, an angle ($\varphi_U$) between a voltage and the d-axis is greater than an angle ($\varphi_I$) between a current and the d-axis or than the angle between the current and the d-axis offset by 180°, and the exciting current ($I_{ex}$) is reduced if, in the d-q coordinate system, the angle ($\varphi_U$) between the voltage and the d-axis is smaller than the angle ($\varphi_I$) between the current and the d-axis or than the angle between the current and the d-axis offset by 180°.

**2.** Method of claim 1, wherein a difference ($\Delta\varphi$) between the angle ($\varphi_U$) between the voltage and the d-axis and the angle ($\varphi_I$) between the current and the d-axis in the d-q coordinate system is controlled to a value of 0° or 180° using the excitation current ($I_{ex}$) as a manipulated variable.

**3.** Method according to claim 2, wherein the difference ($\Delta\varphi$) is controlled to 0° in a motor operation and to 180° in a generator operation.

**4.** Method according to any one of the preceding claims, wherein the electric machine (100) is operated above the speed limit with block control and below the speed limit with PWM control.

**5.** Method according to any one of the preceding claims, wherein the excitation current ($I_{ex}$) is adjusted as a manipulated variable within the scope of a subordinate control, in particular by specifying an initial value ($I_{ex,init}$).

**6.** Method according to any one of the preceding claims, with reference to claim 2, wherein the control comprises a proportional and/or an integral component (501, 502).

**7.** Method according to any one of the preceding claims, wherein the voltage ($U_{dq}$) is determined in d-q coordinates based on a precommutation angle ($\alpha$) to be set and/or adjusted.

**8.** Method according to claim 7, wherein the precommutation angle ($\alpha$) is set and/or adjusted based on a torque ($M_{soll}$) demanded by the electric machine (100) and a most recently determined torque (Mist).

**9.** Computing unit (140) adapted to perform a method according to any one of the preceding claims.

**10.** Computer program that causes a computing device (140) to perform a method according to any one of claims 1 to 8 when executed on the computing device (140).

**11.** Machine-readable storage medium having a computer program stored thereon according to claim 10.

**Revendications**

**1.** Procédé pour faire fonctionner une machine électrique à excitation séparée (100), dans lequel un courant d'excitation ($I_{ex}$) est réglé comme une grandeur réglante dans le cadre d'une régulation,
**caractérisé en ce que** la machine électrique (100) est entraînée avec une sélection de blocs,
dans lequel, lorsque la vitesse de rotation (n) de la machine électrique est supérieure à une limite de vitesse de rotation pouvant être prédéfinie, le courant d'excitation ($I_{ex}$) est augmenté, lorsqu'un angle ($\varphi_U$) entre une tension et l'axe d dans le système de coordonnées d-q est supérieur à un angle ($\varphi_I$) entre un courant et l'axe d ou à l'angle entre le courant et l'axe d décalé de 180°, et le courant d'excitation ($I_{ex}$) est réduit lorsque l'angle ($\varphi_U$) entre la tension et l'axe d dans le système de coordonnées d-q est inférieur à l'angle ($\varphi_I$) entre le courant et l'axe d ou à l'angle entre le courant et l'axe d décalé de 180°.

2. Procédé selon la revendication 1, dans lequel une différence ($\Delta\varphi$) entre l'angle ($\varphi_U$) entre la tension et l'axe d et l'angle ($\varphi_I$) entre le courant et l'axe d dans le système de coordonnées d-q est régulée à une valeur de 0° à 180° en utilisant le courant d'excitation ($I_{ex}$) comme une grandeur réglante.

3. Procédé selon la revendication 2, dans lequel la différence ($\Delta\varphi$) est régulée à 0° dans un mode moteur et à 180° dans un mode générateur.

4. Procédé selon l'une des revendications précédentes, dans lequel la machine électrique (100) est entraînée avec une sélection de blocs au-dessus de la limite de vitesse de rotation et avec une commande PWM en dessous de la limite de vitesse de rotation.

5. Procédé selon l'une des revendications précédentes, dans lequel le courant d'excitation ($I_{ex}$) est réglé comme une grandeur réglante dans le cadre d'une régulation en cascade, en particulier en définissant préalablement une valeur initiale ($I_{ex,init}$).

6. Procédé selon l'une des revendications précédentes, lorsque dépendante de la revendication 2, dans lequel la régulation comprend une partie proportionnelle et/ou intégrale (501, 502).

7. Procédé selon l'une des revendications précédentes, dans lequel la tension ($U_{dq}$) est déterminée en coordonnées d-q sur la base d'un angle de pré-commutation ($\alpha$) à régler et/ou à réguler.

8. Procédé selon la revendication 7, dans lequel l'angle de pré-commutation ($\alpha$) est réglé et/ou régulé sur la base d'un couple ($M_{soll}$) requis par la machine électrique (100) et d'un dernier couple ($M_{ist}$) déterminé.

9. Unité de calcul (140) configurée pour mettre en œuvre un procédé selon l'une des revendications précédentes.

10. Programme informatique qui permet à une unité de calcul (140) de mettre en œuvre un procédé selon l'une des revendications 1 à 8, lorsqu'il est exécuté sur l'unité de calcul (140).

11. Support de mémoire lisible par machine sur lequel est stocké un programme informatique selon la revendication 10.

**Fig. 1**

EP 3 685 504 B1

# Fig. 2

# Fig. 3

Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7723933 B2